# EUROPEAN PATENT APPLICATION

(11) **EP 1 475 066 A2**
(43) Date of publication of application: **10.11.2004**
(21) Application number: 04010967.0
(22) Date of filing: 07.05.2004
(51) Int. Cl.: A61H 23/02, B60N 2/44

(54) **Massage apparatus**

(30) Priority: 07.05.2003 DE 10320371
(71) Applicant: FICO CABLES, LDA, 4471 Maia (PT)
(72) Inventor: Martins, Carla Sobral, 4470-263 Vermoim Maia (PT)
(74) Representative: Hess, Peter K., Dipl.-Phys.

(57) **Abstract**

The present invention relates to a massage apparatus for seats (in particular for seats of motor vehicles), in which oscillations are generated by means of the movement of a mass element. Said oscillations are transmitted to an outer housing of said massage apparatus according to the present invention in order to further transmit the same to a seated person for realizing a massage effect. Therefore, the massage apparatus 1 comprises a housing 10 for receiving a mass element 20; a means 30 for a moveable mounting of said mass element 20 within said housing 10; wherein said mass element 20 is moveable in such a way that said housing 10 is put into oscillations which are useable for the massage of a seated person.

## Description

### 1. Field of the invention

The present invention relates to a massage apparatus for seats, in particular seats for a motor vehicle, in which vibrations are generated by means of the movement of a mass element wherein said vibrations are used for the massage of the user of the seat.

### 2. Background of the invention

Since a long time, seats are known, in particular seats of motor vehicles, wherein the back of these seats are equipped with adjustable spine supports. These spine supports serve for the adaptation to a more or less bent seating posture as well as to an adaptation to different body heights of different passengers of a motor vehicle in order to reduce the exhaustion of a driver or a co-driver during a long drive. Said spine supports are, however, rigid arrangements as soon as they have been adapted to the needs of the respective driver.

In other seats of simple construction in motor vehicles, support structures are used instead of said spine supports, which define the shape of the respective seat as well as supporting structures for the cushioning of the seat. These supporting structures are relatively rigid and they only slightly adapt to the shape of the body of the seated person.

In order to enhance the comfort of the seat, in particular of the seat of a motor vehicle, different massage apparatus were developed in the past which massage the body of the seated person during the drive. The most simple massage apparatus comprise rollers or sphere like elements mounted in regular distances to each other which provide a massage effect by the movement of the body of the seated person. More complex systems, as for instance disclosed in the US-A-5 033 458, comprise driven apparatus in which plane elements are cyclically tilted by means of gears for instance in the back of a seat of a motor vehicle in order to massage the back of a seated person in this manner.

WO 01/74290 discloses a further massage apparatus which moves moveably supported massage bodies via a vibration mechanism in such a way that the ends of said massage bodies massage the seated person. To this end, said massage bodies are moveably mounted on two shafts wherein one of said shafts move said massage body by means of an eccentric connection. These massage apparatus comprising a plurality of shafts driven by a motor and corresponding bearings for the massage bodies, as mentioned above, are expensive in their construction. Because of this reason, they are not only cost intensive, but additionally require a lot of space in the seat of the motor vehicle. It is furthermore disadvantageous that said massage bodies directly engage the cushioning of the seat of the motor vehicle in order to massage the body of the driver through the same. In this manner, the cushioning is strongly burdened and it has to be made of an expensive wear resisting material. Thus, such a massage apparatus of this complex construction can only be used for motor vehicles of the higher price level because it would disproportionally increase the cost of a motor vehicle of a lower price level.

A further massage apparatus is disclosed by the DE-A-199 30 759 comprising pressure elements rotatably supported around a shaft. These pressure elements include pressure planes eccentrically extending in view of said rotation axis which are used for the pressing of cushioning areas situated behind the seat cover. Based on the eccentric mounting of said pressure elements, the respective cushioning areas are pressed in the direction of a driver dependent on the rotation of the driving motor. It is however disadvantageous that the amplitude of the massage movement is predetermined by the shape of the installed pressure element. Therefore, the variation of the massage is limited to a small range. A further disadvantage consists in the fact that the pressure elements are encapsulated by a closed, elastically deformable clothing in order to prevent the wear of the cyclically touched cushioning areas. Such constructions are time-consuming and, thus, cost intensive.

It is therefore the problem of the present invention to provide a massage apparatus suitable for motor vehicles of all price levels based on its simple construction and which guarantees at the same time a variable massage for the seated person.

### 3. Summary of the invention

The above problem is solved by a massage apparatus for the installation in a seat, in particular in a seat of a motor vehicle, comprising a housing for receiving a mass element and means for moveably mounting said mass element within said housing wherein said mass element is moveable in such a way that said housing is put into vibration which are useable for the massage of a seated person.

The present invention consists in the fact to move a gyrating mass in shape of a mass element within a housing. In this manner, the movement of the gyrating mass is transmitted to the surrounding housing based on the vis inertiae wherein said housing is preferably according to the invention connected to the seat structure. The seat structure indicates in this case a supporting structure for the cushioning of a seat or a spine support or similar constructions which receive the vibrations of the housing in order to pass the same on to the body of the seated person. These passed movements are mostly vibrations or oscillations which provide a massage effect to the body of the seated person. This massage effect serves for the relaxation of the seated person and realizes an enhanced seat comfort. The gyrating mass or said mass element moved within said housing, can carry out different movements to generate the above mentioned, vibration generating vis inertiae. Such movements are rotations or translations wherein additionally the size or the mass of the mass element can be varied.

According to a first preferred embodiment of the present invention, said mass element is rotatable wherein the vibrations of the housing are generated by the rotation of said mass element.

According to a further preferred embodiment of the present invention, said means for the moveable mounting of said mass element within said housing comprises a driven shaft to which said mass element is eccentrically mounted.

Based on the off-centre or eccentrical mounting of said mass element or said gyrating mass on said driven shaft, the vibrations of said housing are generated by means of the rotation of said mass element. Dependent on the size of said mass element and on the size of said eccentricity, said generated vibrations are different. Thus, said vibrations are determined on the one hand by how far off-centre the mass element is mounted on said driven shaft and on the other hand by how far said mass element is rotated by the driven shaft. Because of this reason, this manifold variation of the vibrations transmitted to the seated person for massage also enables a multifunctionally adjustable massage.

According to a further preferred embodiment of the present invention, said shaft to which said mass element is eccentrically mounted, is rigid and it is rotated by an electric motor arranged inside said housing.

The driving unit of said mass element, preferably according to the invention formed by an electric motor, can be arranged in different ways. A preferred embodiment of the present invention arranges said electric motor within said massage apparatus in order to provide in this manner a compact device. Based on this arrangement, the mass of said electric motor influences the vibrations of the massage apparatus. In order to guarantee a reliable operation, said electric motor must be dampingly mounted so that it is not damaged by the vibrations within said housing. Such a massage apparatus can be arbitrarily positioned in a seat of a motor vehicle or in other seats based on its compactness whereby it is appropriate for the massage of the different body parts.

According to a further preferred embodiment of the present invention, the shaft for rotating said mass element within said housing is flexible and it is rotated by an electric motor arranged outside of said housing.

By the arrangement of said electric motor outside of said housing, the massage apparatus is minimized. Based on this construction, a plurality of massage apparatus can be positioned in a very small space in order to achieve the most different combined massage effects. Further, a distant mounting of said electric motor is enabled by the use of a flexible shaft. This distant arrangement secures a reduced noise exposure or it prevents otherwise required noise isolations. Further, it enables the use of less stable supporting structures or spine supports since the massage apparatus to be supported comprises a lesser weight. A further advantage of said drive by a flexible shaft consists in the fact that several massage apparatus can be commonly driven by only one flexible shaft and because of this reason by only one electric motor. Additionally, said flexible shaft can be simply placed along arbitrary ways with low efforts. In this manner, the technical efforts for the massage apparatus according to the invention is reduced and the space, for instance in motor vehicles, is used more effectively.

According to a further preferred embodiment of the present invention, said mass element is linearly moveable in said housing and the vibrations of said housing are generated by means of a linear motor or by means of a piezoelectric actuator.

The basic principle of the present invention consists in moving a mass element or a gyrating mass in such a way that the generated vis inertiae are transmitted via a housing to a seat structure. Thus, the vibrations cannot only be induced by rotation of said mass element but also by a linear movement. Such linear movements can be realized by means of a linear motor or by means of a piezoelectric actuator.

By this linear movement, a similar massage effect is achieved as for example by rotation. Generally, it provides the possibility to adapt the construction of the massage apparatus to different space requirements.

According to a further preferred embodiment of the present invention, said mass element is a spring biased inductor core moveable by a magnet.

The present invention further comprises a seat, in particular a seat of a motor vehicle, comprising at least a massage apparatus as described above. According to a further preferred embodiment of the present invention, said seat comprises a frame, a spine support or supporting structures on which said massage apparatus is mounted.

Said massage apparatus can be individually installed as well as in plurality in arbitrary seat structures. A preferred task of the present invention consists in providing more comfortable seats of motor vehicles. Because of this reason, a plurality of massage apparatus is placed in the back of the seat as well as in the seating of a seat of a motor vehicle. A separated control of the single elements enables an optimal massage of the seated person. It is additionally possible, to integrate the massage apparatus also in other seats in order to achieve the use of the aforementioned massage effect.

It is further preferred that said massage apparatus of said seat is adapted in its size and performance to arbitrary spine supports and/or supporting structures wherein it is arranged and mounted to arbitrary positions of said spine support and/or said supporting structure preferably by means of clips, rotation clip lockings, glue, screws or rivets. According to a further preferred embodiment of the present invention, the connection of said massage apparatus with said spine support or said supporting structure is adapted dependent on the geometry of the same.

### 4. Short description of the accompanying drawings

Preferred embodiments of the present invention are described with reference to the accompanying drawings. It shows:
- Fig. 1:: A preferred embodiment of the massage apparatus according to the invention in a front view wherein said massage apparatus is mounted on a supporting structure of a back of the seat of a motor vehicle;
- Fig. 2:: Shows a back view of the massage apparatus according to a preferred embodiment of the present invention in connection with a supporting structure of a seat;
- Fig. 3:: Shows a massage apparatus according to a preferred embodiment of the present invention in a side view having an unfolded housing;
- Fig. 4:: Shows a mounting means for mounting the massage apparatus according to the invention to a support structure or a spine support or to other inner structures of a seat;
- Fig. 5:: Shows a preferred embodiment of the massage apparatus according to the invention in a front view in connection with a spine support;
- Fig. 6:: Shows an enlarged depiction of the preferred embodiment of the massage apparatus according to the invention in a front view wherein the housing is unfolded;
- Fig. 7:: Shows a schematic illustration of a seated person from the back wherein the body portions are shown which are preferably to be massaged.

### 5. Detailed description of the invention

The present invention relates to a massage apparatus 1 which can be generally used in seats.

The purpose of the massage apparatus 1 according to the invention consists in the provision of a massage for the body parts of a seated person which are particularly stressed by long seating. By the possibility of the integration of the massage apparatus 1 according to the invention in a seat, the comfort of generally used seats as well as of seats in motor vehicles and airplanes is increased in a space-saving and effective way. The long seating in motor vehicles, in the office or in airplanes leads to exhaustion in different body parts. This is caused for example by a reduced blood circulation or by the tenseness of the muscles in the leg, arm and back portion. In order to counteract these symptoms of fatigue and to enhance the comfort of the seated person, massage apparatus 1 according to the invention are individually or in combination arranged in the respective seat structure in the particularly stressed leg, arm and back portions. Based on the arrangement according to the invention of said massage apparatus 1, the same realize a punctual massage or they massage whole portions of the body of the seated person. To this end, the massage apparatus 1 according to the invention is electronically controlled individually or in combination with other massage apparatus 1. In this manner, the position of the massage as well as the strength of the massage can be optimally adapted to the seated person by means of the massage apparatus 1 according to the present invention.

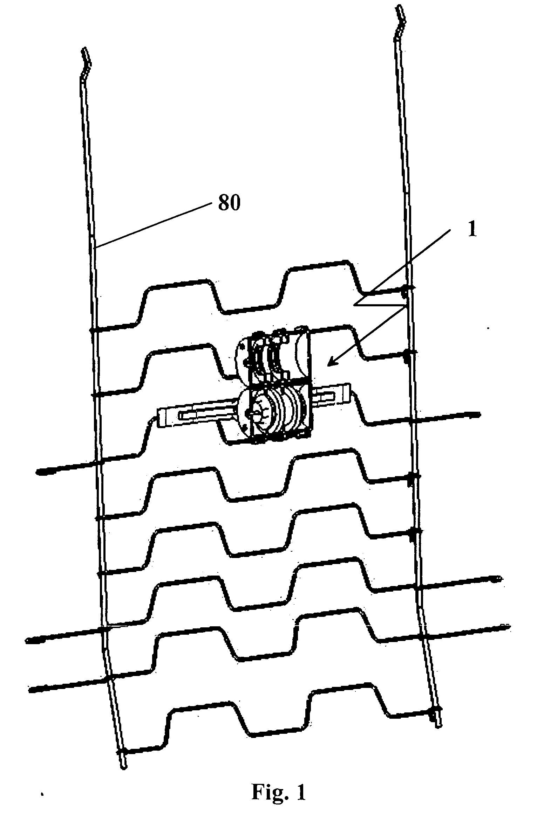

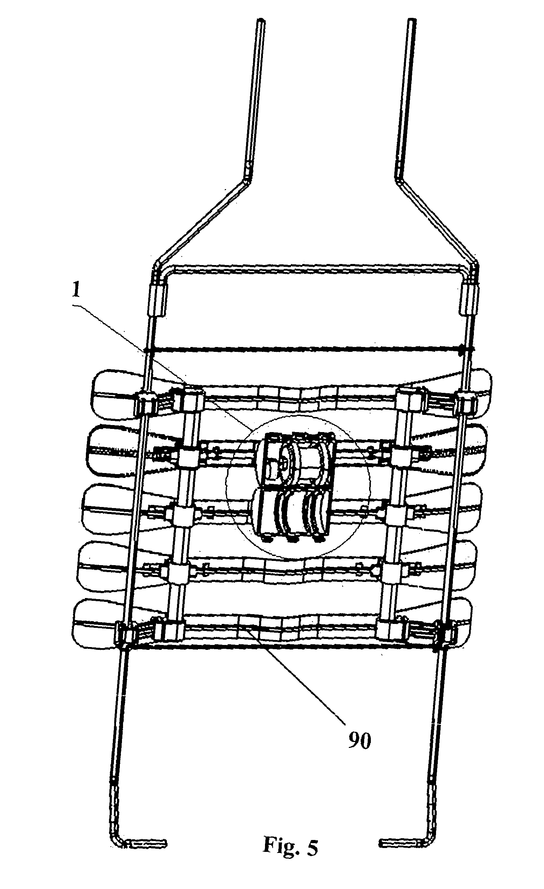

Seats in general and also seats in motor vehicles consists of an inner structure, as for example formed by a frame and/or by a supporting structure 80. This inner structure is equipped with cushions or enclosed by a cushioning cover. Seats in motor vehicles consist of a frame in which for example a supporting structure 80 is mounted by means of spring elements. This supporting structure 80 is formed in simple cases by a grid-like structure as for example shown in Fig. 1. In more expensive seats in motor vehicles, a frame is used as an inner structure having a spine support 90 mounted therein. This spine support 90, as for example shown in Fig. 5, serves for an adjustable shaping of the seat of the motor vehicle. It is possible to adapt in this manner the seat of the motor vehicle to the figure of different drivers or co-drivers. Further, the comfort of a seat in a motor vehicle is increased by such spine supports 90.

The massage apparatus 1 according to the present invention is constructed to be installed in common seats as well as in seats of motor vehicles. The massage apparatus 1 according to the present invention is such positioned within the respective seat that it can massage the desired or sensitive body parts of the seated person. Such a positioning is realized for example by the mounting of the massage apparatus 1 according to the invention on the frame of the seat. Furthermore, it is possible to mount the massage apparatus 1 on the transverse ribs of a supporting structure 80 in a seat of a motor vehicle. Such a preferred embodiment of the present invention is shown in Fig. 1 in which the massage apparatus 1 according to the invention is shown in an open or unfolded housing 10. In Fig. 1, the massage apparatus 1 according to the invention is preferably mounted on the backside of the supporting structure 80. It is, however, also possible to position the massage apparatus 1 at the front side of the supporting structure 80 to achieve the massage effect. Furthermore, the massage apparatus 1 according to the invention can be fastened on a spine support 90 in a seat of a motor vehicle. A preferred embodiment is shown in Fig. 5 in which the mounting of the massage apparatus 1 on the backside of a spine support 90 is depicted. Also in this case, the massage apparatus according to the invention is shown having an open or unfolded housing 10 wherein one half 10a, 10b of the housing 10 is preferably according to the invention mounted on a transversal rib of the spine support 90. A further possibility of the arrangement of the massage apparatus 1 according to the invention in a seat consists in the provision of an adapted support structure holding the massage apparatus 1 in the particular position.

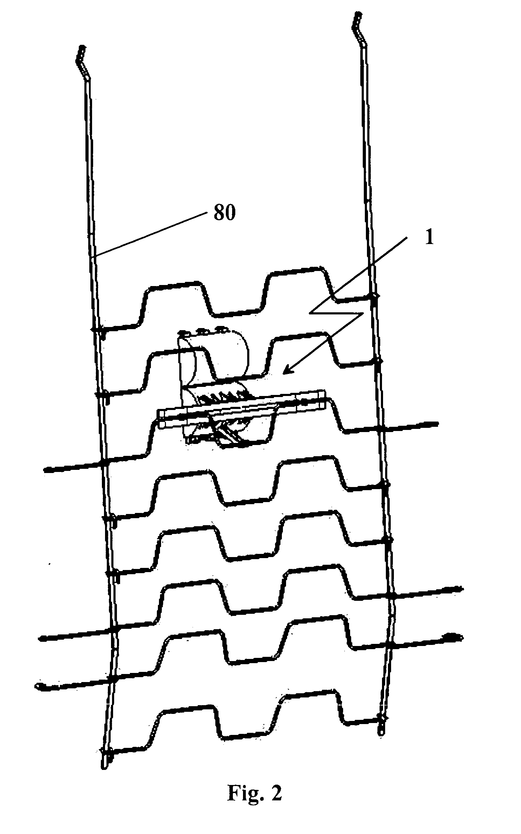

According to a preferred embodiment of the present invention, the massage apparatus 1 is arranged in a back of a seat of a motor vehicle. Figs. 1, 2 and 5 show mountings of the massage apparatus 1 according to the invention either in a supporting structure 80 of a seat of a motor vehicle or on a spine support 90 of a seat of a motor vehicle. In these cases, the massage apparatus 1 is preferably mounted on the backside of these structures to first optimally transmit the generated massage movement to the structure and then to the seated person. It is, however, also preferred according to the invention to mount the massage apparatus 1 on the front side of the supporting structure 80 or the spine support 90 or the seat frame if in this manner the desired massage effect can be generated.

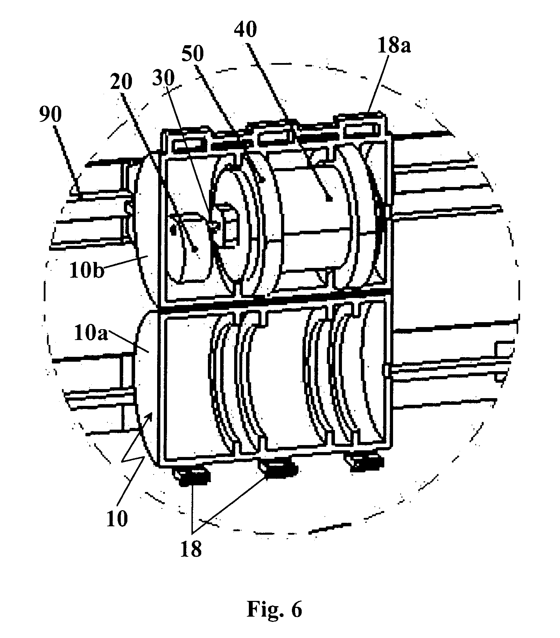

Fig. 6 shows an enlarged illustration of the preferred massage apparatus 1 according to the invention which is also shown in Figs. 1 and 5. The massage apparatus 1 according to the invention which is shown according to a preferred embodiment, comprises a housing 10 having two equal half-round housing halves 10a, 10b. Both housing halves 10a, 10b are moveably connected to each other so that said housing 10 can be arbitrarily opened or closed. It is also preferred according to the invention to provide the housing halves 10a, 10b separated from each other. The closing of the housing 10 or the mounting of both housing halves at each other is preferably according to the invention realized by means of a spring-loaded latch 18 engaging an opening 18a to latch therein. It is also preferred according to the invention to fasten both housing halves at each other by means of screws or to realize a permanent fastening by for example adhesive or rivets.

The mounting of the housing 10 and, therefore, of the whole massage apparatus 1 according to the invention on the supporting structure 80, the spine support 90 or in general on the inner structure of a seat is preferably according to the invention realized by clamps, screws, rivets, adhesives or other possible fastening methods. In this mounting, it is important to note that the massage apparatus 1 according to the invention executes oscillations or vibrations burdening this mounting. Because of this reason, the mountings of the massage apparatus 1 have to be configured in such a way that they exceed the working life of the respective seat and in this manner guarantee a reliable connection between the massage apparatus 1 according to the invention and the used seat structure.

As already mentioned above, the massage apparatus 1 according to the invention comprises a housing 10 for receiving or accommodating a mass element 20. This mass element 20 is moveably mounted within the housing 10 by a means 30. By the specific movement of the mass element 20, the housing 10 is put into vibrations which are used for the massage of the respective body parts of the seated person. This principle according to the invention can be realized by a housing 10 having different shapes as long as the same receive a mass element 20 of appropriate size as well as means 30 for its moveable mounting.

A first preferred embodiment of the present invention is shown in detail in Fig. 6. The massage apparatus 1 according to the invention comprises the housing 10 already mentioned above made of durable material as for example plastic material or the same. Additionally, the massage apparatus 1 according to the invention comprises a mass element 20 moveably arranged inside said housing 10. In a preferred embodiment, said mass element 20 has a cylindrical shape and is made of a material to provide a suitable gyrating mass. The mass is adapted in its size to generate the desired oscillations or the vis inertiae necessary therefore. Preferably according to the invention, the mass element 20 is mounted on a shaft 30. This shaft 30 is rigid and it is the elongation of a rotor or a shaft of an electric motor 40. In order to generate the oscillations or vibrations of the massage apparatus 1 according to the invention, said mass element 20 is eccentrically mounted on said shaft 30. If said mass element 20 is rotated by means of said shaft 30, the whole massage apparatus 1 according to the invention is put into oscillations. These oscillations are transmitted via the inner seat structure or directly to the seated person wherein only the intermediate cushioning material serves as a mediator. These oscillations or vibrations massage the respective body parts and enhance in this manner the comfort and the convenience of the respective seat. The strength of the transmitted oscillations vary dependent on the speed of the used electric motor 40, the mass of the mass element 20 and on the eccentricity of the mounting point of the mass element 20 on the shaft 30. By means of these parameters, it is possible to realize a predetermination of the massage apparatus 1 according to the invention to respective body portions in such a way, that the vibration range is predetermined by choosing the speed interval, the mass of the mass element 20 and the eccentricity.

As already mentioned above, the electric motor 40 preferred according to the invention is arranged within the housing 10. For preventing a damage of the motor 40 by the generated oscillations or vibrations, said motor 40 is dampingly mounted by means of motor fastenings 50 within said housing 10. It is advantageous in this arrangement that the mass of said motor 40 can be used for the oscillations generated according to the invention.

The motor 40 of the massage apparatus 1 is preferably according to the invention electrically connected to a control electronic. This control electronic enables to control the massage apparatus 1 individually or in combination with other installed massage apparatus 1. To this end, said control electronic can be positioned within the seat or at other positions as long as the control panel for the seated person or for the driver or the co-driver in motor vehicles can be conveniently reached.

As explained above, the whole massage apparatus 1 is preferably according to the invention accommodated in a housing 10. Based on this construction, a massage apparatus 1 follows having small extent and small weight which can be arbitrarily arranged in a seat structure individually or in combination with other massage apparatus 1. Additionally, the generated oscillations or vibrations are transmitted by means of the surrounding housing 10 so that the wear of the cushioning of the seat and of the inner seat structure is minimized.

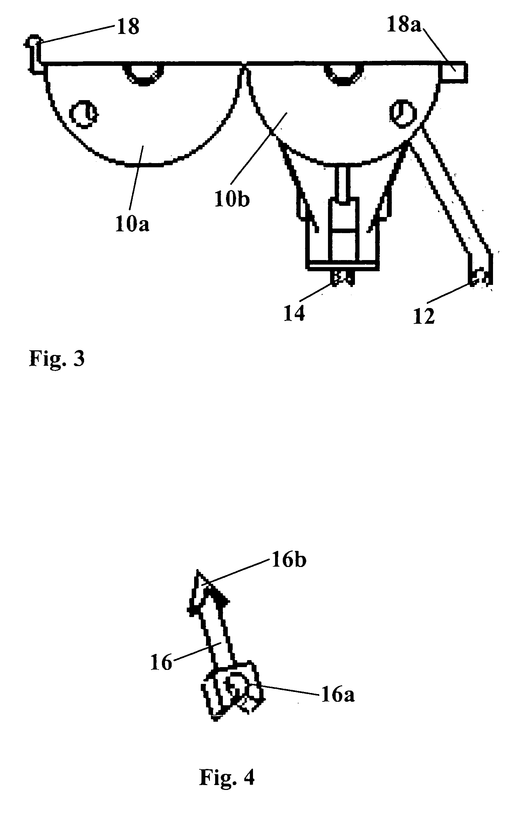

Fig. 3 shows a preferred embodiment of the housing of the present invention in a side view. The housing 10 is shown in an open condition consisting of two halves 10a, 10b wherein on the right and on the left edge of the halves 10a, 10b, respectively, the closing mechanism 18, 18a can be seen. Furthermore, the mounting mechanism of the massage apparatus 1 according to the invention on an inner seat structure is shown in Fig. 3. This mounting is guaranteed with low efforts for example by means of a clip locking 12. This clip locking 12 preferably according to the invention latches in the inner structure of the seat in order to retain the massage apparatus 1 according to the invention. A further mounting point of the massage apparatus 1 is preferably according to the invention secured by the opening 14 at the housing 10 and a latching mechanism 16 which is shown in Fig. 4. The latching mechanism 16 also comprises a clip locking 16a latching in the inner structure of the seat, in particular in an arbitrary component of the support structure 80 or the spine support 90. Therefore, this clip locking 16a realizes the preferred mounting according to the invention of the massage apparatus 1 on vertically, horizontally or angularly extending elements of said support structure 80 or said spine support 90. It additionally comprises a latching mechanism 16b latchingly received by the opening 15 in the housing 10. The latching mechanism 16b is preferably according to the invention a rotation clip locking. After the rotation clip locking 16b has been inserted and latched within the opening 14, it is turned around a certain angle in order until the clip locking 16a is suitably oriented to the support structure 80 or the sp0ine support 90 in view of the fastening. This fastening is simple, fast, can be arbitrarily adapted and has a low weight. In this manner, the massage apparatus 1 according to the invention is mounted on two points at the desired position in the respective seat. It is also preferred according to the invention to mount the massage apparatus only by clip lockings 12 or only by rotation clip lockings 16b. It is further preferred according to the invention to retain the massage apparatus 1 within the seat by means of other reliable fastening methods, as for example screws, glue or rivets.

A further preferred embodiment of the present invention consists of the eccentric mounting of the mass element 20 on a flexible shaft (not shown). This shaft is connected to an electric motor arranged outside said housing 10. The control of said mass element 20 via said flexible shaft enables a more compact configuration of said housing 10 and said mass element 20 achieving the same massage effect. The motor for rotating said flexible shaft can be accommodated remote from the housing 10 in the seat structure. Additionally, it is preferred according to the invention to drive different massage apparatus 1, that is different housings 10 with mass elements 20, by means of the same flexible shaft. Based on this control, a coordinated massage effect of several massage apparatus 1 according to the invention is realized. A further advantage of the flexible shaft and the distant arrangement of the driving motor consists in the reduced noise exposure generated by said motor.

In principle, the massage effect is generated by the movement of mass element 20 within said housing 10. These oscillations or vibrations of the housing 10 and thus of the whole massage apparatus 1 according to the invention can be also induced by means of a linear or a curvilinear movement of said mass element 20 beside said rotation.

According to a further preferred embodiment of the present invention, the mass element 20 of appropriate size is, thus, put into oscillations by means of a piezoelectric actuator (not shown). This piezoelectric actuator is instead of said motor 40 arranged within said housing 10. Dependent on the size of the piezoelectric actuator and on the size of the mass element 20, a more compact massage apparatus 1 according to the invention can be achieved in this manner compared to the same having a motor 40. The less space requirement of the preferred massage apparatus 1 according to the invention guarantees the construction of relatively small seat structures. Additionally, this preferred embodiment of the present invention realizes a low weight configuration whereby a weight reduction is achieved for instance in seats of motor vehicles which at the same time contribute to the reduction of the fuel consumption.

The piezoelectric actuator for preferably according to the invention displacing said mass element 20 is electrically controlled by means of a computer program or by a separate circuit. This computer assisted program can be carried out for example by means of an on-board computer of a motor vehicle which can be found in the meantime in nearly every motor vehicle. If the preferred embodiment of the present invention is used in another seat, the same can comprise a respective small computer unit. Therefore, it is also guaranteed in this preferred embodiment of the present invention that the massage apparatus 1 can be individually controlled or in combination with other massage apparatus 1 and it can be arbitrarily adjusted by the seated person.

In a further preferred embodiment of the present invention, the oscillations are generated by means of a linear motor (not shown) in combination with said mass element 20. Said linear motor bi-directionally moves said mass element 20 and, in this manner, generates the massaging effect of the massage apparatus 1. Said linear motor is electrically controlled in a similar manner as described above in connection to the preferred embodiments.

A further preferred embodiment of the present invention comprises the combination of an electrically controlled magnet, as for example a coil, instead of said motor 40, with a spring-biased inductor core of said coil. Said spring-biased inductor core is preferably according to the invention made of a material containing iron and it is such dimensioned that it can serve as a mass element. By a specific control of said magnet, said conductor core is cyclically pulled inside said magnet or said coil and after switching off said magnetic field, it is pushed out of said coil by said biased spring. Since said conductor core comprises a sufficient big mass, the movement of said conductor core puts said massage apparatus 1 according to the invention in oscillations because the magnet as well as the spring-biased conductor core are arranged in the inside of the housing 10. Also this preferred embodiment of the present invention is qualified by a compact configuration with low space requirements which can be effectively electronically controlled.

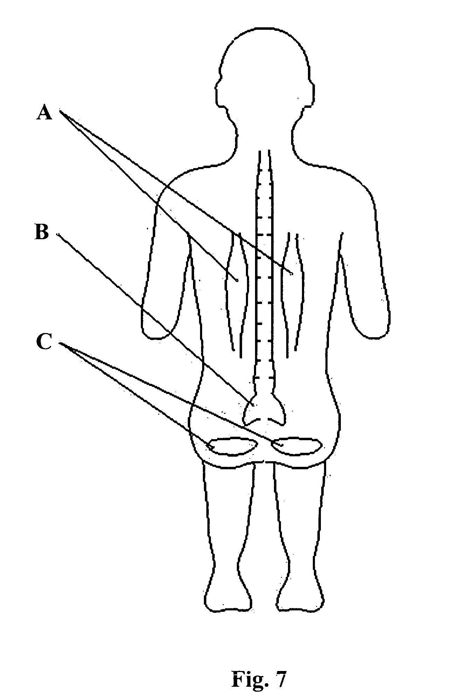

Fig. 7 shows a schematic illustration of a seated person in a back view wherein different areas are shown burdened during seating. The back portions A, the vertebrae column areas B and the pelvic areas C are characterized by symptoms of fatigue during long seating. Because of this reason, single or several combined massage apparatus 1 according to the present invention are arranged even in these areas to counteract an exhaustion of the body of the seated person. By means of this measure, for example the physical fatigue of a driver in motor vehicles is prevented and, therefore, the accident risk is reduced. The massage apparatus 1 according to the present invention arranged in the respective areas A, B and C can be adapted in their single effects as well as by their combined effect and in a specifically resulting supplementing effect. Furthermore, it is preferred according to the invention to optimally adapt the massage apparatus 1 by its dimensioning, that is by the size of the mass element 20, by the speed range of the motor 40 and by the variation of the speed by means of a specific electronic control.

It is also preferred according to the invention to moveably arrange the different alternatives of the massage apparatus 1 within the seat structure. To this end, the massage apparatus 1 are preferably according to the invention guided on rails onto which they can be different positioned by means of electric motors or via bowden cables. Based on this construction, an improved adaptation is realized between the massage apparatus 1 and the respective body portion of the seated person.

Based on the preferred simple configuration according to the invention as well as on the used simple materials, a massage apparatus 1 is provided appropriate for motor vehicles for all price levels. Additionally, different alternatives are comprised which can be adapted to the respective space requirements and weight requirements. Besides the use of the massage apparatus 1 according to the invention and seats of motor vehicles, they can also be installed in other seats in the same manner.

## Claims

1. A massage apparatus (1) for the installation in a seat, in particular in a seat of a motor vehicle, comprising:
a. a housing (10) for receiving a mass element (20);
b. a means (30) for a moveable mounting of said mass element (20) within said housing (10); wherein
c. said mass element (20) is moveable in such a way that said housing (10) is put into oscillations which are usable for the massage of a seated person.

2. Massage apparatus (1) according to claim 1, wherein said mass element (20) is rotatable and wherein said oscillations of said housing (10) are generated by the rotation of said mass element (20).

3. Massage apparatus (1) according to claim 2, wherein said means (30) comprises a driven shaft (30) onto which said mass element (20) is eccentrically mounted.

4. Massage apparatus (1) according to claim 3, wherein said shaft (20) is rigid and it is rotated by means of an electric motor (40) arranged within said housing (10).

5. Massage apparatus (1) according to claim 3, wherein said shaft (20) is flexible and it is rotated by means of an electric motor (40) arranged outside of said housing (10).

6. Massage apparatus (1) according to claim 1, wherein said mass element (20) is linearly or curvilinearly moveable and wherein said oscillations of said housing (10) are generated by the movement of said mass element (20) by means of a linear motor or a piezoelectric actuator.

7. Massage apparatus (1) according to claim 1, wherein said mass element (20) comprises a spring-loaded inductor core which is moveable by means of a magnet.

8. A seat, in particular a seat of a motor vehicle comprising at least one massage apparatus (1) according to one of the claims 1 to 7.

9. The seat according to claim 8, further comprising a frame, a spine support or a supporting structure on which the massage apparatus (1) is mounted.

10. The seat according to claim 8, wherein said massage apparatus (1) is adapted in its size and performance to arbitrary spine supports (90) and/or supporting structures (80).

11. The seat according to claim 9 or 10, wherein said massage apparatus (1) is arranged and mounted to arbitrary positions of said spine support (90) and/or said supporting structure (80) preferably by means of clips (16a), rotation clip lockings (16b), glue, screws or rivets.

12. The seat according to one of the claims 9-11, wherein the connection of said massage apparatus with said spine support (90) or said supporting structure (80) is adapted dependent on the geometry of the same.
